# EUROPEAN PATENT SPECIFICATION

(11) **EP 4 024 298 B1**
(45) Date of publication and mention of the grant of the patent: **24.07.2024**
(21) Application number: 20858982.0
(22) Date of filing: 08.05.2020
(51) Int. Cl.: G06Q 10/00

(54) **VEHICLE MEMBER DAMAGE REPAIR DETERMINATION SYSTEM, DEVICE FOR DETERMINING ALLOWABILITY OF WARRANTY REQUEST FOR VEHICLE MEMBER DAMAGE, METHOD FOR OPERATING DEVICE FOR DETERMINING ALLOWABILITY OF WARRANTY REQUEST FOR VEHICLE MEMBER DAMAGE, AND PROGRAM**
SYSTEM ZUM BESTIMMEN DER REPARATUR VON SCHÄDEN AN FAHRZEUGTEILEN, VORRICHTUNG ZUM BESTIMMEN DER ZULÄSSIGKEIT EINER GARANTIEANFORDERUNG FÜR SCHÄDEN AN FAHRZEUGTEILEN, VERFAHREN ZUM BETREIBEN EINER VORRICHTUNG ZUM BESTIMMEN DER ZULÄSSIGKEIT EINER GARANTIEANFORDERUNG FÜR SCHÄDEN AN FAHRZEUGTEILEN UND PROGRAMM
SYSTÈME DE DÉTERMINATION DE LA RÉPARATION DES DOMMAGES À UN ÉLÉMENT DE VÉHICULE, DISPOSITIF DE DÉTERMINATION DE L'ADMISSIBILITÉ D'UNE DEMANDE DE GARANTIE POUR DES DOMMAGES À UN ÉLÉMENT DE VÉHICULE, PROCÉDÉ DE FONCTIONNEMENT D'UN DISPOSITIF DE DÉTERMINATION DE L'ADMISSIBILITÉ D'UNE DEMANDE DE GARANTIE POUR DES DOMMAGES À UN ÉLÉMENT DE VÉHICULE ET PROGRAMME

(30) Priority: 30.08.2019 JP 2019158705
(43) Date of publication of application: 06.07.2022
(73) Proprietor: There Win Three Service Co., Ltd., Minato-ku Tokyo 105-0001 (JP); MSM Co., Ltd., Tokyo 107-0062 (JP)
(72) Inventor: MAEZAWA, Shuhei, Tokyo 105-0001 (JP); ICHINOHE, Tasuku, Tokyo 105-0001 (JP)
(74) Representative: Fabiano, Piero
(86) International application number: PCT/JP2020/018718
(87) International publication number: WO 2021/038971

(56) References cited:
- JP-A- 2003 132 166
- JP-A- 2019 114 059
- JP-A- H09 297 838
- JP-B1- 6 578 607
- US-A1- 2008 281 658
- US-A1- 2015 317 739
- US-A1- 2018 029 184
- US-B1- 8 510 196

## Description

### TECHNICAL FIELD

The present invention relates to a vehicle member damage repair determination system, a device for determining allowability of a warranty request for a vehicle member damage, a method for operating a device for determining allowability of a warranty request for a vehicle member damage, and a program.

### BACKGROUND ART

Traditionally, when a member of a vehicle is damaged, there has been a warranty service that offers replacement or repair of the damaged member if the damage falls under the warranty.

For example, when the windshield of a vehicle is damaged, there has been a warranty service that offers replacement or repair of the windshield if the damage falls under the warranty.

Furthermore, when one tire of a vehicle is punctured, there has been a warranty service that offers replacement of one or four tires with new tires.

As a first warranty service, for example, when a vehicle purchaser who has subscribed to a warranty service for windshield damages of vehicles suffers a windshield damage, the purchaser takes a warranty and his/her vehicle to a vehicle dealer or the like, a clerk at the dealer or the like checks whether the damage is a damage covered by the warranty, and if the damage is covered by the warranty, the clerk takes a photograph of a damaged portion and sends necessary data to a warranty company by e-mail. The warranty company checks from those data whether the windshield itself is covered by the warranty, visually determines from the photograph of the damage of the windshield whether the damage is covered by the warranty, and sends a determination result to the dealer or the like.

Further, when a tire purchaser who has subscribed to a tire puncture warranty service suffers a puncture of one tire, the purchaser takes a warranty and his/her vehicle to a tire dealer or the like which provides a tire puncture warranty service (which may be any dealer providing this service, and is not needed to be a shop at which the tire was purchased), and a clerk at the dealer or the like checks whether the puncture is a puncture covered by the warranty, and if the puncture is covered by the warranty, the clerk takes a photograph of a punctured portion and sends necessary data to a warranty company by e-mail. The warranty company checks from those data whether the tire itself is covered by the warranty, visually determines from the photograph of the puncture of the tire whether the puncture of the tire is covered by the warranty, and sends a determination result to the dealer or the like.

Further, as a second warranty service, there are companies that sell tires on the Internet, and similar tire puncture warranty services are provided by the companies. The sale of tires itself is performed on the Internet, but installation of tires is performed at affiliated tire dealers and the like in all parts of the country. When a tire purchaser who has subscribed to a puncture warranty service suffers a puncture of one tire, he/she first calls a company from which the purchaser purchased the tire to explain that the tire has punctured, and then sends a photograph of the punctured tire and a warranty/service request to the company by e-mail. The company determines whether the punctured tire is covered by the warranty, and if the punctured tire is covered by the warranty, the company sends this fact to the purchaser by e-mail. The purchaser designates an affiliated tire dealer or the like at which the purchaser wishes to replace the tire, and writes and sends a replacement date and time up to a third choice by e-mail. Based on that information, the sales company negotiates with the affiliated tire dealer or the like, decides the replacement date and time, and then notifies the result to the purchaser by e-mail.

Document D1 US2008/281658 refers to creating and reviewing vehicle damage repair estimates.

Document D2 US2018029184 refers to reporting data pertaining to an actionable condition of an electrical shop tool.

Document D3 US2015/317739 relates to vehicle repair cost estimation verification.

### SUMMARY OF INVENTION

### TECHNICAL PROBLEM

However, with respect to the first warranty service, it only takes about 5 minutes to determine whether the actual windshield damage or puncture is covered by the warranty, but if the number of warranty requests is large, the determine at the warranty company takes much time. Even if a vehicle purchaser or tire purchaser who has subscribed to the warranty service takes a vehicle having a damaged windshield or punctured tire to the dealer, there are a case where the windshield cannot be immediately replaced or repaired, and a case where the tire cannot be replaced before the day is over. Also, even if the determination is completed immediately, there is a case where the windshield or tire to be replaced is out of stock. In such a case, in the case of the tire, the tire is required to be replaced with an alternative tire or replaced on another day.

Unlike the first warranty service, the second warranty service requires neither time constraint nor change in replacement date at tire dealers and the like, but requires frequent communication by phone or e-mail before tire replacement is performed, which has imposed burdens on tire purchasers who have utilized the puncture warranty service.

Therefore, an object of the present invention is to provide a vehicle member damage determination system that reduces stress on vehicle purchasers who have had a vehicle member damage warranty service.

Another object of the present invention is to provide a device for use in the system to determine allowability of a warranty request for a vehicle member damage.

Still another object of the present invention is to provide a method for operating a device for determining allowability of a compensation request for the vehicle member damage.

### SOLUTION TO PROBLEM

According to one aspect of the present invention, a vehicle member damage repair determination system comprises: a requestor terminal for making a warranty request for vehicle member damage; a device for determining allowability of a warranty request for vehicle member damage, wherein the requestor terminal and the device for determining allowability of a warranty request for vehicle member damage are connected to each other via the Internet, wherein the device for determining allowability of a warranty request for vehicle member damage comprises: request screen distribution means for distributing a request screen to the requestor terminal when a request from the requestor terminal is received; warranty request receiving means for registering a request content from the requestor terminal; vehicle member damage image storing means for storing a large number of vehicle member damage images; image processing means for identifying information on a vehicle member and a state of vehicle member damage from an image such as of a vehicle member and a vehicle member damage image included in a request content; type identifying means for comparing the state of the vehicle member damage with a large number of vehicle member damage images stored in the vehicle member damage image storing means to identify a type of the vehicle member damage; request determination means for determining whether the identified type of the vehicle member satisfies a warranty request condition; and determination result distribution means for distributing a determination result to the requestor terminal, and wherein the requestor terminal comprises: screen display means for displaying the request screen; and storing means for storing an image such as of a vehicle member and a vehicle member damage image. As a result, by making a warranty request for vehicle member damage from the requestor terminal, the requestor can receive a determination result as to whether or not the warranty request condition is satisfied. If the warranty request condition is satisfied, the vehicle member can be replaced with a new vehicle member or repaired simply by taking the result to a dealer or the like. Further, even when a request is made at the dealer or the like, a determination result can be received without delay, so that the vehicle member can be immediately replaced or repaired if the warranty request condition is satisfied.

In the vehicle member damage repair determination system, a request on the request screen is made by inputting URL described on a warranty from the requestor terminal. As a result, the requestor terminal can shift to the request screen simply by inputting URL.

In the vehicle member damage repair determination system, the requestor terminal includes imaging means, and reads out a QR code (registered trademark) described on the warranty, whereby it is possible to make a request for the request screen. As a result, the requestor terminal can shift to the request screen simply by reading out the QR code (registered trademark) from the imaging means.

In the vehicle member damage repair determination system, the requestor terminal includes e-mail sending and receiving means, when a request for the request screen is made, an e-mail address registration screen is first distributed from the device for determining allowability of a warranty request for vehicle member damage, and when registration of an e-mail address is completed, URL to the request screen is sent to the e-mail address. As a result, by registering the e-mail, the URL to the request screen can be received, so that the requestor terminal can access the request screen immediately even when the input is interrupted.

In the vehicle member damage repair determination system, the determination result is also sent to the registered e-mail address. As a result, the determination result can be displayed at any time by searching an e-mail.

In the vehicle member damage repair determination system, the determination result contains a QR code (registered trademark). As a result, a QR code (registered trademark) is caused to be read out at a vehicle member dealer or the like or a vehicle dealer, whereby it is possible to check necessary information at the dealer or the like, so that the vehicle member can be replaced with a new vehicle member or repaired immediately.

According to another aspect of the present invention, the vehicle member is a windshield, and the vehicle member image is an image of a front grill of the vehicle. As a result, it is possible to replace or repair the windshield.

According to another aspect of the present invention, a device for determining allowability of a warranty request for vehicle member damage is used in the vehicle member damage repair determination system. As a result, it is possible to accurately, concisely, and promptly perform the process from the distribution of the request screen until the distribution and/or sending of the determination result to the requestor in response to the request for the request screen from the requestor.

According to another aspect of the present invention, a method that operates a device for determining allowability for a warranty request for vehicle member damage and is used in the vehicle member damage repair determination system or the device for determining allowability of a warranty request for vehicle member damage, comprises: a step of receiving a warranty request from the requestor terminal; a step of distributing a request screen to the requestor terminal; a step of registering a request content from the requestor terminal; a step of identifying information on a vehicle member and a state of vehicle member damage from a vehicle member image and a vehicle member damage image contained in the request content by the image processing means; a step of comparing the state of the vehicle member damage with a large number of vehicle member damage images stored in the vehicle member damage image storing means to identify a type of the vehicle member damage; a step of determining whether the identified type of the vehicle member damage satisfies a warranty request condition; and a step of distributing a determination result to the requestor terminal. As a result, it is possible to reliably perform the process from the distribution of the request screen until the distribution and/or sending of the determination result to the requestor in response to the request for the request screen from the requestor.

The method for operating a device for determining allowability for a warranty request for vehicle member damage further comprises: a step of distributing the e-mail address registration screen to the requestor terminal before the request screen is distributed to the requestor terminal; a step of registering an e-mail address from the requestor terminal; a step of sending URL for accessing the requestor screen to the registered e-mail address; and a step of receiving an access from the requestor terminal. As a result, it is possible to reliably communicate with the requestor terminal via the e-mail address.

The method for operating a device for determining allowability for a warranty request for vehicle member damage further comprises a step of sending a determination result to the registered e-mail address. As a result, it is possible to reliably send the determination result to the e-mail address of the requestor.

In the method for operating a device for determining allowability for a warranty request for vehicle member damage, the determination result is distributed and/or sent with a QR code (registered trademark) being contained in the determination result. As a result, it is possible to reliably perform the distribution and/or sending of the QR code (registered trademark) of the determination result.

According to another aspect of the present invention, a program that operates a device for determining allowability for a warranty request for vehicle member damage and is used in the vehicle member damage repair determination system or the device for determining allowability of a warranty request for vehicle member damage, comprises: a step of receiving a warranty request from the requestor terminal; a step of distributing a request screen to the requestor terminal; a step of registering a request content from the requestor terminal; a step of identifying information on a vehicle member and a state of vehicle member damage from a vehicle member image and a vehicle member damage image contained in the request content by the image processing device; a step of comparing the state of the vehicle member damage with a large number of vehicle member damage images stored in the vehicle member damage image storing means to identify a type of the vehicle member damage; a step of determining whether the identified type of the vehicle member damage satisfies a warranty request condition; and a step of distributing a determination result to the requestor terminal. As a result, it is possible to reliably perform the process from the distribution of the request screen until the distribution and/or sending of the determination result to the requestor in response to the request for the request screen from the requestor.

The program for operating a device for determining allowability for a warranty request for vehicle member damage further comprises: a step of distributing the e-mail address registration screen to the requestor terminal before the request screen is distributed to the requestor terminal; a step of registering an e-mail address from the requestor terminal; a step of sending URL for accessing the requestor screen to the registered e-mail address; and a step of receiving an access from the requestor terminal. As a result, it is possible to reliably communicate with the requestor terminal via the e-mail address.

The program for operating a device for determining allowability for a warranty request for vehicle member damage further comprises a step of sending a determination result to the registered e-mail address. As a result, it is possible to reliably send the determination result to the e-mail address of the requestor.

In the program for operating a device for determining allowability for a warranty request for vehicle member damage, the determination result is distributed and/or sent with a QR code (registered trademark) being contained in the determination result. As a result, it is possible to reliably distribute and/or send the QR code (registered trademark) of the determination result.

### ADVANTAGEOUS EFFECTS OF INVENTION

According to the present invention, the requestor for the vehicle member damage warranty can receive the determination result indicating whether or not the warranty request condition is satisfied, by making a warranty request for vehicle member damage from the requestor terminal, and when the warranty request condition is satisfied, the vehicle member can be replaced with a new vehicle member or repaired simply by taking the result to a dealer or the like.

### BRIEF DESCRIPTION OF DRAWINGS

[FIG. 1] FIG. 1 is a diagram showing a configuration example of a vehicle member damage repair determination system according to an embodiment of the present invention.
[FIG. 2] FIG. 2 is a diagram showing a hardware configuration example of a server 20 for determining allowability of a warranty request for vehicle member damage according to the embodiment of the present invention.
[FIG. 3] FIG. 3 is a diagram showing a software configuration example of a server for determining allowability of a vehicle member damage warranty request for the vehicle member damage repair determination system according to the embodiment of the present invention.
[FIG. 4] FIG. 4 is a diagram showing a software configuration example of a request terminal of the vehicle member damage repair determination system according to the embodiment of the present invention.
[FIG. 5] FIG. 5 is an example of a photograph of a front grill of a vehicle.
[FIG. 6] FIG. 6 is a photograph showing an example of windshield damage.
[FIG. 7] FIG. 7 is a photograph showing another example of windshield damage.
[FIG. 8] FIG. 8 is a photograph showing yet another example of windshield damage.
[FIG. 9] FIG. 9 is a photograph showing yet another example of windshield damage.
[FIG. 10] FIG. 10 is a photograph showing yet another example of windshield damage.
[FIG. 11] FIG. 11 is a diagram showing typical damage forms of a windshield and calibration elements of the damage forms.
[FIG. 12] FIG. 12 is a diagram showing conditions for allowing a warranty request for windshield damage.
[FIG. 13] FIG. 13 is a diagram showing conditions under which a warranty request for windshield damage cannot be allowed.
[FIG. 14] FIG. 14 is a diagram showing an example of a side surface of a tire, and is a diagram showing positions where numbers or the like for specifying the tire are indicated.
[FIG. 15] FIG. 15 is a diagram showing an example of a photograph of a tire puncture.
[FIG. 16] FIG. 16 is a flowchart showing determination result distribution processing according to the embodiment of the present invention.
[FIG. 17] FIG. 17 is a diagram showing conditions for allowing a warranty request for a tire puncture.
[FIG. 18] FIG. 18 is a diagram showing a pending condition of a warranty request for a tire puncture.
[FIG. 19] FIG. 19 is a schematic diagram showing a method of identifying a type of damage from a vehicle member damage image.

### DESCRIPTION OF EMBODIMENTS

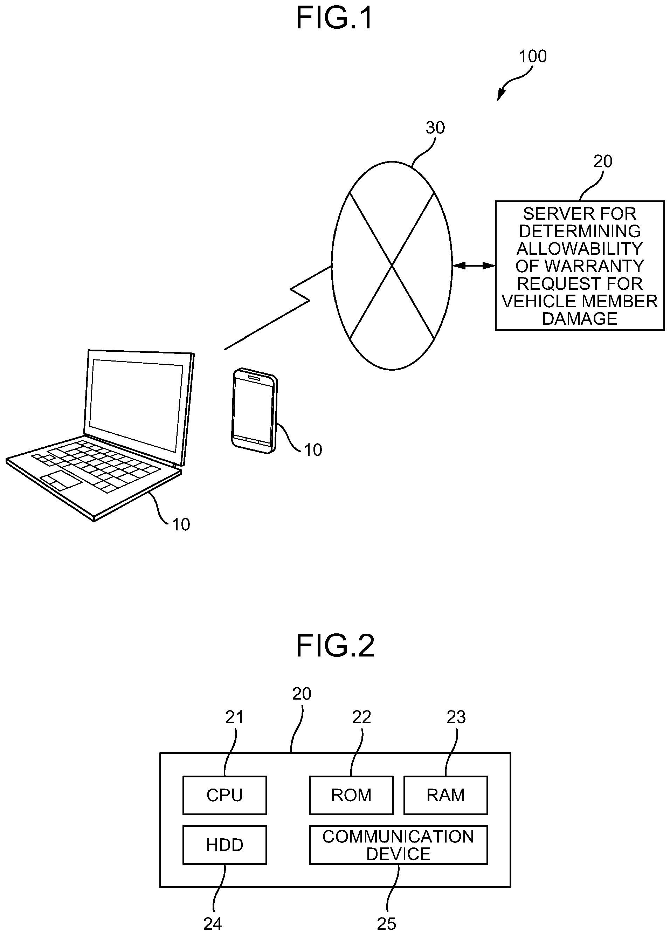

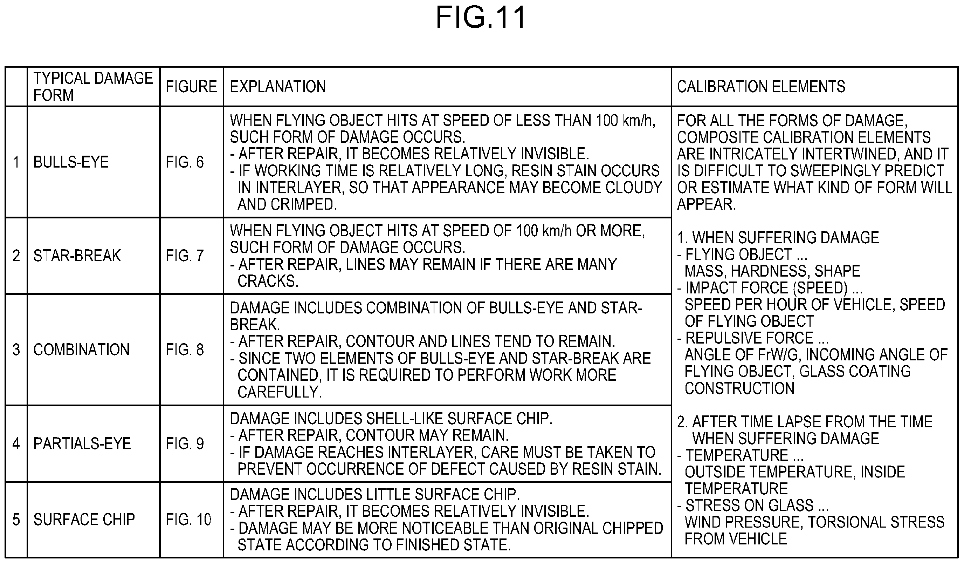

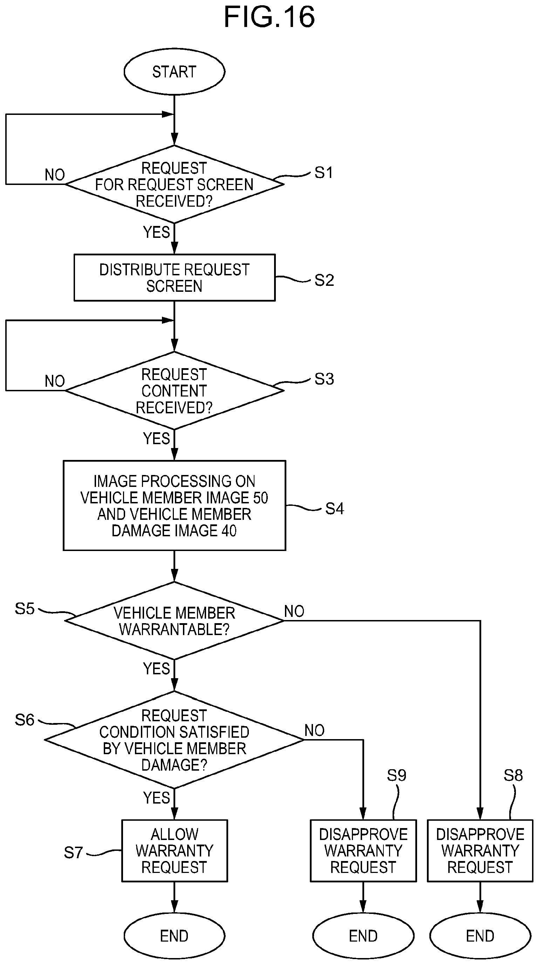

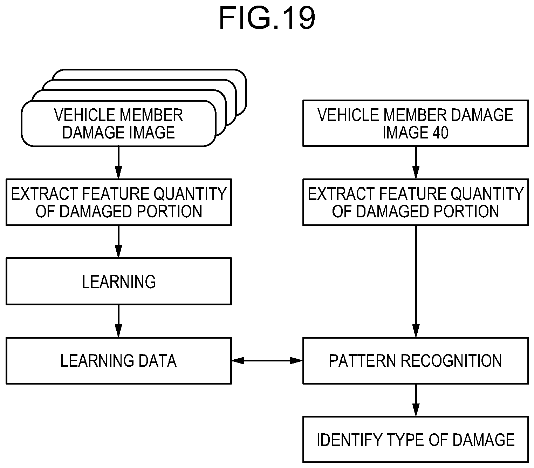

Embodiments of the present invention will be described in detail hereunder with reference to Figs. 1-19.

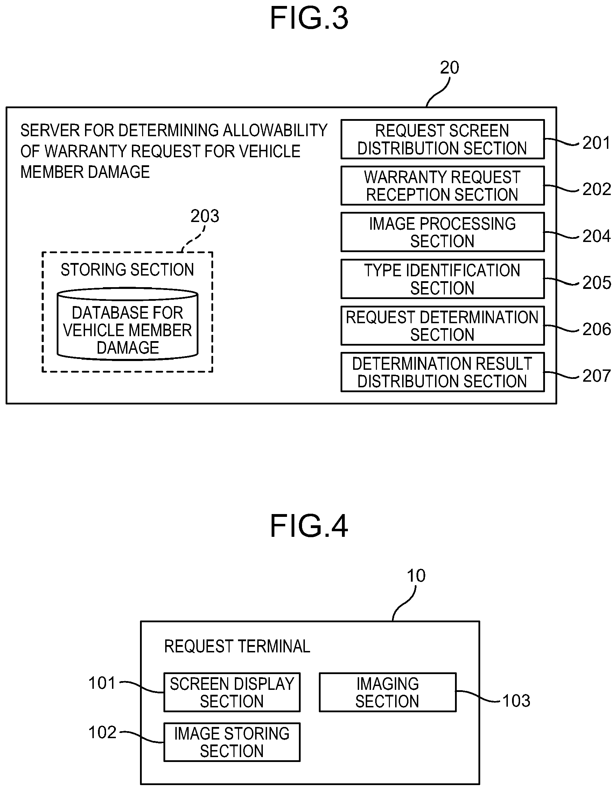

Fig. 1 is a diagram showing a configuration of a vehicle member damage repair determination system according to an embodiment of the present invention. Referring to Fig. 1, a vehicle member damage repair determination system 100 according to the embodiment of the present invention includes a requestor terminal 10 which makes a warranty request for vehicle member damage, and a server 20 for determining allowability of a warranty request for vehicle member damage. The requestor terminal 10 and the server 20 for determining allowability of a warranty request for vehicle member damage are connected to each other via the Internet 30. Fig. 3 is a diagram showing a software configuration example of the server for determining allowability of a warranty request for vehicle member damage in the vehicle member damage repair determination system according to the embodiment of the present invention. Referring to Fig. 3, the server 20 for determining allowability of a warranty request for vehicle member damage includes a request screen distribution section 201 for distributing a request screen to the requestor terminal 10 when receiving a request from the requestor terminal 10, a warranty request reception section 202 for registering a request content from the requestor terminal 10, a vehicle member damage image storing section 203 for storing a large number of vehicle member damage images 40, and image processing means for identifying information on a vehicle member and the state of vehicle member damage from a vehicle member image 50 and a vehicle member damage image 40 contained in the request content. Further, the server 20 for determining allowability of a warranty request for vehicle member damage further includes a vehicle member damage type identification section 205 for comparing the state of the vehicle member damage with a large number of vehicle member damage images 40 stored in the vehicle member damage image storing section to identify the type of the vehicle member damage, and a request determination section 206 for determining whether the specified vehicle member damage type satisfies a warranty request condition. Further, the server 20 for determining allowability of a warranty request for the vehicle member damage includes a determination result distribution means 207 for distributing a determination result to the requestor terminal.

Fig. 4 is a diagram showing a software configuration example of the request terminal of the vehicle member damage repair determination system according to the embodiment of the present invention. Referring to Fig. 4, the requestor terminal 10 includes a screen display section 101 for displaying a request screen and the like, a vehicle member image 50, and an image storing section for vehicle member damage 102.

The server 20 for determining allowability of a warranty request for vehicle member damage is a device for distributing a request screen for a warranty request for vehicle member damage (not shown), accepting a warranty request for vehicle member damage, determining whether the request meets a warranty condition, and distributing a determination result.

The server 20 for determining allowability of a warranty request for vehicle member damage distributes a request screen to a predetermined application program installed in the requestor terminal 10 in response to a request from the requestor terminal 10. The requestor terminal 10 displays the request screen on the screen display section 101. For example, when the server 20 for determining allowability of a warranty request for vehicle member damages is a web server, the request screen to be distributed is a web page, and the web page is displayed on a web browser of the requestor terminal 10.

The requestor terminal 10 is various types of information terminals including a personal computer, a smartphone, a tablet terminal and the like to be used by a requestor (a purchaser of a vehicle or a vehicle member, a clerk of a dealer or the like). Application programs for displaying the request screen, such as a web browser and a dedicated application, are pre-installed in the requestor terminal 10.

The network 30 is a communication network including wired and wireless ones. The network 30 includes, for example, the Internet, a public switched telephone network, and WiFi (registered trademark).

Fig. 2 is a diagram showing a hardware configuration example of a server 20 for determining allowability of a warranty request for a tire puncture according to the embodiment of the present invention. As shown in Fig. 2, the server 20 for determining allowability of a warranty request for a tire puncture according to the embodiment of the present invention includes CPU (Central Processing Unit) 21, ROM (Read Only Memory) 22, and RAM (Random Access Memory) 23, HDD (Hard Disk Unit) 24, and communication means 25.

The CPU 21 executes various programs and performs arithmetic processing. The ROM 22 stores programs and the like required at the time of startup. The RAM 23 is a work area for temporarily storing the processing in the CPU 21 and storing data. Various data and programs are stored in the HDD 24. The communication means 25 communicates with a device such as the requestor terminal 10 via the network 30.

Fig. 3 is a diagram showing a software configuration example of the server for determining allowability of a warranty request for vehicle member damage in the vehicle member damage repair determination system according to the embodiment of the present invention.

The server 20 for determining allowability of a warranty requests for vehicle member damage includes, as main functions, the request screen distribution section 201, the warranty request reception section 202, the storing section 203, the image processing section 204, and the type identification section 205, the request determination section 206 and the determination result distribution section 207.

The requestscreen distribution section 201 distributes the vehicle member damage requests screen to the requestor terminal 10 in response to the request from the requestor terminal 10.

The warranty request reception section 202 receives a warranty request for vehicle member damage from the requestor terminal 10.

The storing section 203 has a vehicle member damage database, and a large number of images of various types of vehicle member damage are stored therein.

When receiving a vehicle member image 50 and a vehicle member damage image 40 sent from the requestor terminal 10, the image processing section 204 recognizes information for identifying a vehicle member from the vehicle member image 50, and also acquires the information to identify the vehicle member. Further, the image processing section 204 recognizes a punctured portion of the vehicle member from the vehicle member damage image 40, and also acquires the information.

The type identification section 205 compares the information on the punctured portion 401 of the vehicle member acquired by the image processing section with the vehicle member damage images stored in the vehicle member damage database of the storing section 203 to identify the type of the puncture.

The request determination section 206 determines whether or not the warranty request condition is satisfied, from the information on the vehicle member identified by the image processing section 204 and the type of puncture identified by the type identification section 205.

The determination result distribution section 207 distributes a determination result as to allowability of the request determined in the request determination section 206 to the requestor terminal 10.

The requestor terminal 10 includes, as main functions, the screen display section 101, the image storing section for vehicle member damage 102, and optionally an imaging section 103.

The screen display section 101 displays a request screen and a determination result which are distributed from the server 20 for determining allowability of a warranty request for vehicle member damage. Further, URL for requesting a request screen described on a warranty is input from the screen display section 101.

The image storing section for vehicle member damage 102 stores a captured vehicle member damage image 40 and an image (not shown) showing a vehicle having a punctured vehicle member installed therein.

The imaging section 103 is used to image the vehicle member damage image 40 and read a QR code (registered trademark) requesting a request screen described on the warranty.

Note that the respective functional sections are executed by computer programs to be executed on hardware resources such as CPU, ROM, RAM, HDD, and communication means of computers constituting the server 20 for determining allowability of a warranty request for vehicle member damage and the requestor terminal 10. Therefore, these functional sections may be read with replacements such as "means", "module", "unit" or "circuit".

Further, the arrangement of the respective functional sections of the server for determining allowability of a warranty request for vehicle member damage is an example, and any arrangement is possible insofar as it includes functional sections of the server 20 for determining allowability of a warranty request for vehicle member damage as a whole on the system configuration. For example, the storing section 203 of the server 20 for determining allowability of a warranty request for vehicle member damage may be transferred to another server.

Information processing of the vehicle member damage repair determination system 100 according to the embodiment of the present invention will be described.

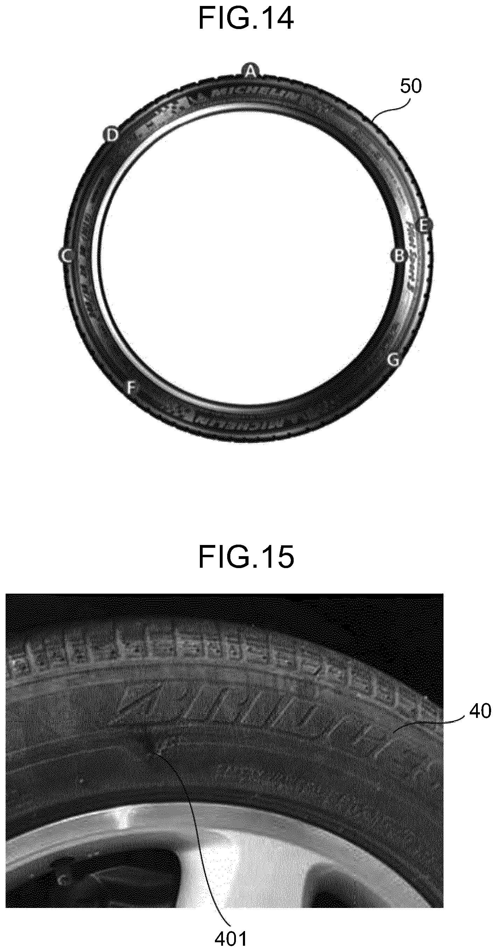

Fig. 14 is a flowchart showing puncture repair determination processing according to the embodiment of the present invention.

S 1: The request screen distribution section 201 determines whether or not a request for a request screen from the requestor terminal 10 has been received. When the request for a screen request has been received, the processing proceeds to S2.

S2: The request screen is distributed to the requestor terminal 10.

In the requestor terminal 10, upon reception of a request screen, a login screen to the request screen is displayed, and it is possible to log in to the request screen by inputting an identification number of warranty (for example, TW-180617-152645-638497 (company code-date-hour, minute, second-comma second) automatic numbering). Necessary items, for example, a vehicle member dealer or the like, or a vehicle dealer at which a vehicle member is replaced when the request is allowed is designated, and a desired replacement date is input. Further, a vehicle member image 50 and a vehicle member damage image 40 are designated. The request is completed, for example, by clicking a "request" button after inputting all the required items and designating the required data.

S3: When the request from the requestor terminal 10 is received, the processing proceeds to S4.

S4: The vehicle member image 50 is subjected to image processing to identify the vehicle member.

When the vehicle member image 50 is input to the image processing section 204, a feature quantity is extracted based on pixel values of the image. As a result, the information shown in the image 50 is automatically recognized to identify the vehicle member. When the vehicle member cannot be identified, it is determined and identified by human's eyes.

Further, the vehicle member damage image 40 is subjected to image processing, and compared with a large number of various types of vehicle member damage images stored in the storing section 203 to identify the type of a puncture.

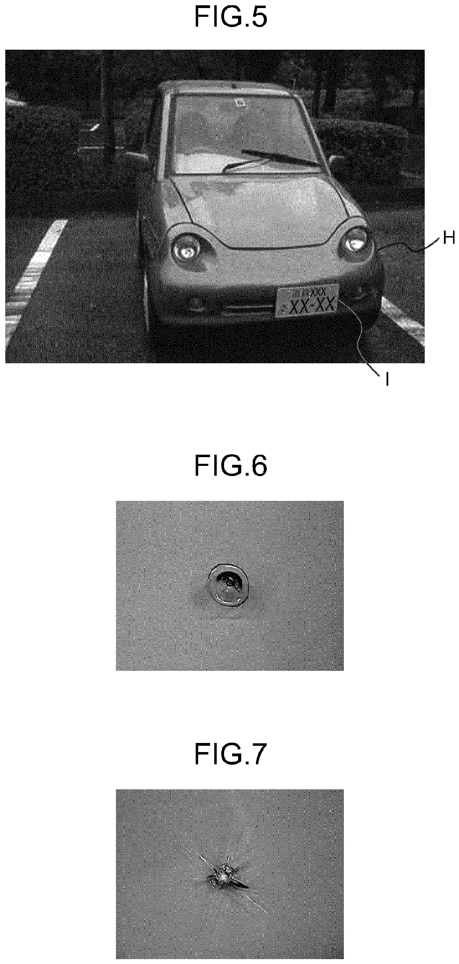

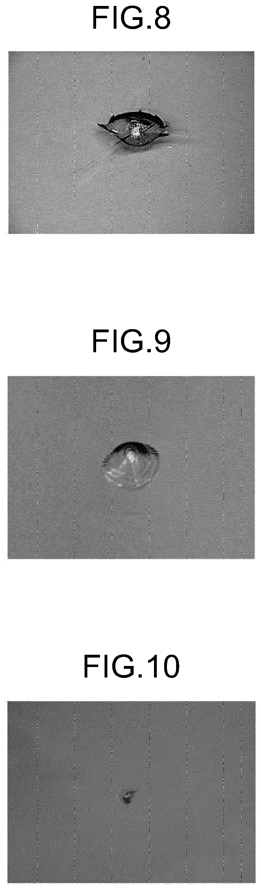

As shown in Fig. 6, there is a case where the punctured vehicle member in the vehicle member damage image 40 has a punctured portion 401 (circular hole) on the side surface thereof. When the vehicle member damage image 40 is input to the image processing section 204, a feature quantity is extracted based on pixel values of the image. As shown in Fig. 10, the image processing section 204 compares the feature quantity of the extracted image with image feature quantities of a large number of vehicle member damage images registered in training data registered in the vehicle member damage database, whereby the vehicle member damage image 40 is recognized as being identical to a registered vehicle member damage image which approximates the vehicle member damage image 40 with a predetermined score or more (pattern recognition), thereby identifying the type of the damage. When the type of damage cannot be identified, it is determined and identified by human's eyes.

When the identification of the vehicle member and the identification of the type of the damage are completed, the processing proceeds to S5.

S5: If the vehicle member identified by performing image processing on the vehicle member image 50 matches the vehicle member registered on the warranty, the processing proceeds to S6. If they do not match each other, the processing proceeds to S8.

Note that in S4, only the identification of the vehicle member may be performed, and when the vehicle member identified in S5 matches the vehicle member registered on the warranty, the type of the damage can be identified.

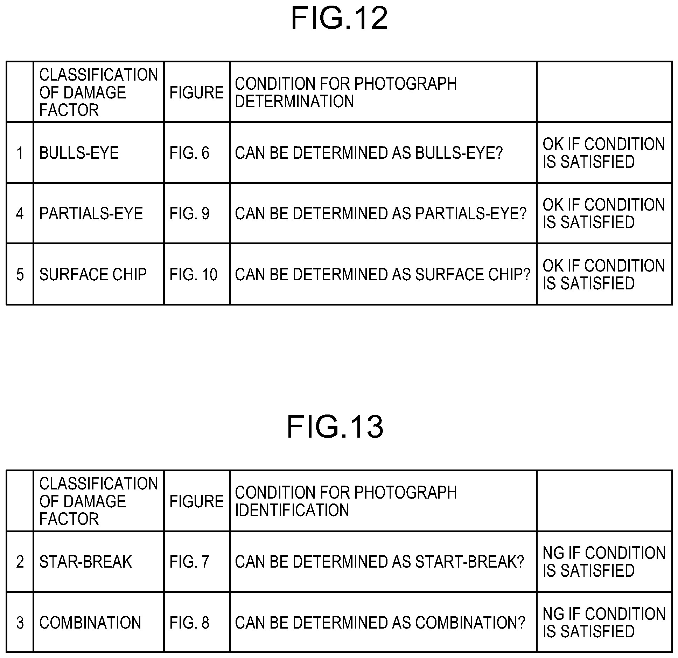

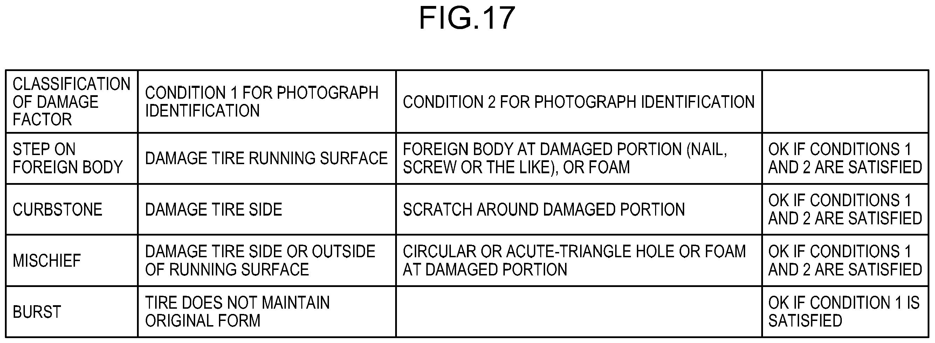

S6: If the type of the damage identified by performing image processing on the vehicle member damage image 40 satisfies a condition for photograph identification (for example, see Figs. 12 and 17) which allows the warranty request, the processing proceeds to S7. If the type of the damage does not satisfy the condition, the processing proceeds to S9. Further, If the type of the damage satisfies a condition for photograph identification which does not allow any warranty request (for example, see Fig. 13), the processing also proceeds to S7.

S7: A determination result indicating allowability of the warranty request is distributed to the requestor terminal 10. An QR code (registered trademark) may be distributed together with the determination result indicating allowability, or the determination result may be sent by e-mail. Further, a QR code (registered trademark) may be sent by e-mail together with the determination result. The determination result may include a dealer or the like for replacement and a date and time when the replacement is possible.

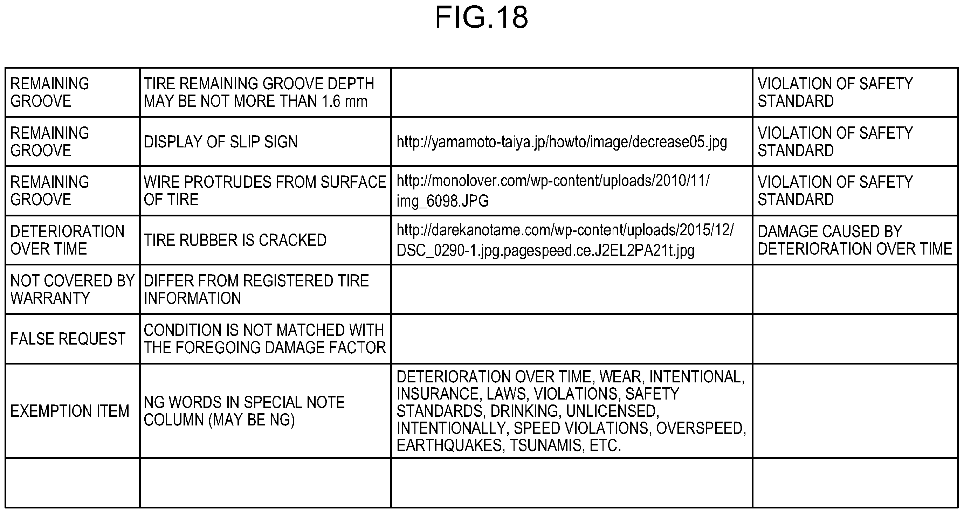

Thereafter, the vehicle member is replaced or repaired at a dealer or the like, but if reservation (for example, see Fig. 18) is satisfied, the vehicle member is recognized not to be covered by the warranty, and the vehicle member cannot be immediately warranted.

S8: A determination result indicating that the request cannot be allowed because the vehicle member is not covered by the warranty is distributed to the requestor terminal 10.

S9: A determination result indicating that the warranty request cannot be allowed because the vehicle member damage does not meet the request condition is distributed to the requestor terminal 10.

If the purchaser does not satisfy this result, the purchaser shall contact a customer service center, a dealer or the like by telephone or the like, or takes the vehicle to the dealer or the like together with the warranty as usual.

### Example 1

When the vehicle member is a windshield, the vehicle member image 50 is an image 50 of the front grill of the vehicle.

In the above-mentioned S4, a registration number and a form are shown on the image 50 of the front grill of the vehicle, so that the vehicle type and model year can be identified and thus the windshield can be identified from all of these information. It is apparent from those skilled in the art that it is unnecessary to require all of these information insofar as the windshield can be identified, and the windshield may be identified from information other than the above information.

In the above-mentioned S6, if the type of the damage identified by performing image processing on the image 40 of the windshield damage satisfies "the condition for photograph identification" in Fig. 12, the processing proceeds to S7. If the type of the damage does not satisfy the condition for photograph identification, the processing proceeds to S9. Further, if the identified type of the damage satisfies "the condition for photograph identification" in Fig. 13, the processing also proceeds to S7.

### EXAMPLE 2

When the vehicle member is a tire, the vehicle member image 50 is an image 50 of a tire.

When designating an image on the requestor terminal 10 of the above-mentioned S2, a photograph of a side surface of the vehicle to which the punctured vehicle member is attached can also be further designated.

In the above-mentioned S4, an indication on the tire image 50 includes A: manufacturer name, B: tire series name, C: tire size, D: tire structure (for example, TREAD PLIES: 1POLYESTER + 2STEEL + 1POLYAMIDE SIDEWALL PLIES: 1 POLYSTER), E: UTQG marking, F: Tire identification number (including DOT), G: Maximum load, maximum air pressure (MAX LOAD: 8.25 kg MAX PRESS: 340 KPa), and the tire can be identified from all of these information. It is apparent from those skilled in the art that it is unnecessary to require all of these information insofar as the tire can be identified, and the tire may be identified from information other than the above information.

In the above-mentioned S6, if the type of the puncture identified by performing image processing on the image 40 of the punctured tire satisfies "a condition 1 for photograph identification" and "a condition 2 for photograph identification" in Fig. 17, the processing proceeds to S7. If the type of the puncture does not satisfy these conditions, the processing proceeds to S9.

Although the embodiment of the present invention has been described in detail with reference to the drawings, the specific configuration is not limited to this embodiment, and changes of design to be performed to the extent that it does not depart from the gist of the present invention as described by the appended claims.

### REFERENCE SIGNS LIST

10 requestor terminal
20 server for determining allowability of warranty for vehicle member damage
30 network
40 vehicle member damage image
50 vehicle member image
100 vehicle member damage repair determination system
101 screen display section
102 image storing section for vehicle member damage
103 imaging section
201 request screen distribution section
202 warranty request reception section
203 storing section
204 image processing section
205 type identification section
206 request determination section
207 determination result distribution section
401 damaged portion
A manufacturer name
B tire series name
C tire size
D tire structure
E UTQG marking
F tire identification number (including DOT)
G maximum load, maximum air pressure
H registration number
I form

## Claims

1. A vehicle member damage repair determination system comprising:
a requestor terminal for making a warranty request for vehicle member damage; and
a device for determining allowability of a warranty request for vehicle member damage,
wherein the requestor terminal and the device for determining allowability of a warranty request for vehicle member damage are connected to each other via the Internet,
wherein the device for determining allowability of a warranty request for vehicle member damage comprises:
request screen distribution means for distributing a request screen to the requestor terminal when a request from the requestor terminal is received;
warranty request receiving means for registering a request content from the requestor terminal;
vehicle member damage image storing means for storing a large number of vehicle member damage images;
image processing means for identifying information on a vehicle member and a state of vehicle member damage from a vehicle member image and a vehicle member damage image included in a request content, said information being identified by extracting a feature quantity based on pixel values of the image;
type identifying means for comparing the state of the vehicle member damage expressed in terms of said feature quantity with the feature quantities of a large number of vehicle member damage images stored in the vehicle member damage image storing means to identify by means of pattern recognition a type of the vehicle member damage;
request determination means for determining whether the identified type of the vehicle member damage satisfies a warranty request condition; and
determination result distribution means for distributing a determination result to the requestor terminal, and
wherein the requestor terminal comprises:
screen display means for displaying the request screen; and
storing means for storing a vehicle member image and a vehicle member damage image.

2. The vehicle member damage repair determination system according to claim 1, wherein a request on the request screen is made by inputting URL described on a warranty from the requestor terminal.

3. The vehicle member damage repair determination system according to claim 1, wherein the requestor terminal includes imaging means, and reads out a QR code (registered trademark) described on the warranty to make a request for the request screen.

4. The vehicle member damage repair determination system according to any one of claims 1 to 3, wherein the requestor terminal includes e-mail sending and receiving means; and wherein when a request for the request screen is made, an e-mail address registration screen is first distributed from the device for determining allowability of a warranty request for vehicle member damage, and when registration of an e-mail address is completed, URL to the request screen is sent to the e-mail address.

5. The vehicle member damage repair determination system according to claim 4, wherein the determination result is also sent to the registered e-mail address.

6. The vehicle member damage repair determination system according to any one of claims 1 to 5, wherein the determination result contains a QR code (registered trademark).

7. The vehicle member damage repair determination system according to any one of claims 1 to 6, wherein the vehicle member is a windshield, and the vehicle member image is an image of a front grill of a vehicle.

8. A device that determines allowability of a warranty request for vehicle member damage and is used in the system according to any one of claims 1 to 7.

9. A method that operates a device for determining allowability for a warranty request for vehicle member damage and is used in the system according to any one of claims 1 to 7 or the device for determining allowability of a warranty request for vehicle member damage according to claim 8, comprising:
a step of receiving a warranty request from the requestor terminal;
a step of distributing a request screen to the requestor terminal;
a step of registering a request content from the requestor terminal;
a step of identifying information on a vehicle member and a state of vehicle member damage from a vehicle member image and a vehicle member damage image contained in the request content by the image processing means, said information being identified by extracting a feature quantity based on pixel values of the image;
a step of comparing the state of the vehicle member damage expressed in terms of said feature quantity with the feature quantities of a large number of vehicle member damage images stored in the vehicle member damage image storing means to identify by means of pattern recognition a type of the vehicle member damage;
a step of determining whether the identified type of the vehicle member damage satisfies a warranty request condition; and
a step of distributing a determination result to the requestor terminal.

10. The method according to claim 9 that depends on claim 4 or depends on claims 5 to 8 depending on claim 4, further comprising:
a step of distributing the e-mail address registration screen to the requestor terminal before the request screen is distributed to the requestor terminal;
a step of registering an e-mail address from the requestor terminal;
a step of sending URL for accessing the requestor screen to the registered e-mail address; and
a step of receiving an access from the requestor terminal.

11. The method according to claim 10, further comprising a step of sending a determination result to the registered e-mail address.

12. The method according to any one of claims 9 to 11, wherein the determination result is distributed and/or sent with a QR code (registered trademark) being contained in the determination result.

13. A program that operates a device for determining allowability for a warranty request for vehicle member damage and is used in the system according to any one of claims 1 to 7 or the device for determining allowability of a warranty request for vehicle member damage according to claim 8, comprising:
a step of receiving a warranty request from the requestor terminal;
a step of distributing a request screen to the requestor terminal;
a step of registering a request content from the requestor terminal;
a step of identifying information on a vehicle member and a state of vehicle member damage from a vehicle member image and a vehicle member damage image contained in the request content by the image processing means, said information being identified by extracting a feature quantity based on pixel values of the image;
a step of comparing the state of the vehicle member damage expressed in terms of said feature quantity with the feature quantities of a large number of vehicle member damage images stored in the vehicle member damage image storing means to identify by means of pattern recognition a type of the vehicle member damage;
a step of determining whether the identified type of the vehicle member damage satisfies a warranty request condition; and
a step of distributing a determination result to the requestor terminal.

14. The program according to claim 13 that depends on claim 4 or depends on claims 5 to 8 depending on claim 4, further comprising:
a step of distributing the e-mail address registration screen to the requestor terminal before the request screen is distributed to the requestor terminal;
a step of registering an e-mail address from the requestor terminal;
a step of sending URL for accessing the requestor screen to the registered e-mail address; and
a step of receiving an access from the requestor terminal.

15. The program according to claim 14, further comprising a step of sending a determination result to the registered e-mail address.

16. The program according to any one of claims 13 to 15, wherein the determination result is distributed and/or sent with a QR code (registered trademark) being contained in the determination result.

## Patentansprüche

1. System zum Bestimmen der Reparatur von Schäden an Fahrzeugteilen, umfassend:
ein Anforderungsendgerät, um eine Garantieanforderung für Schäden an Fahrzeugteilen zu stellen; und
eine Vorrichtung zum Bestimmen der Zulässigkeit einer Garantieanforderung für Schäden an Fahrzeugteilen,
wobei das Anforderungsendgerät und die Vorrichtung zum Bestimmen der Zulässigkeit einer Garantieanforderung für Schäden an Fahrzeugteilen über das Internet miteinander verbunden sind,
wobei die Vorrichtung zum Bestimmen der Zulässigkeit einer Garantieanforderung für Schäden an Fahrzeugteilen umfasst:
Anforderungsbildschirm-Verteilungsmittel zum Verteilen eines Anforderungsbildschirms an das Anforderungsendgerät, wenn eine Anforderung von dem Anforderungsendgerät empfangen wird;
Garantieanforderungs-Empfangsmittel zum Registrieren eines Anforderungsinhalts von dem Anforderungsendgerät;
Speichermittel für Fahrzeugteilschadensbilder zum Speichern einer großen Anzahl von Fahrzeugteilschadensbildern;
Bildverarbeitungsmittel zum Identifizieren von Informationen über ein Fahrzeugteil und einen Zustand eines Fahrzeugteilschadens aus einem Fahrzeugteilbild und einem Fahrzeugteilschadensbild, die in einem Anforderungsinhalt enthalten sind, wobei die Informationen durch Extrahieren einer auf Pixelwerten des Bildes basierenden Merkmalsmenge identifiziert werden;
Typerkennungsmittel zum Vergleichen des in Bezug auf die Merkmalsmenge ausgedrückten Zustands des Fahrzeugteilschadens mit den Merkmalsmengen einer großen Anzahl von Fahrzeugteilschadensbildern, die in dem Fahrzeugteilschadensbild-Speichermittel gespeichert sind, um mittels Mustererkennung einen Typ des Fahrzeugteilschadens zu erkennen;
Anforderungsbestimmungsmittel zum Bestimmen, ob die identifizierte Art des Fahrzeugteilschadens eine Garantieanforderungsbedingung erfüllt; und
Bestimmungsergebnisverteilungsmittel zum Verteilen eines Bestimmungsergebnisses an das Anforderungsendgerät, und
wobei das Anforderungsendgerät umfasst:
Bildschirmanzeigemittel zum Anzeigen des Anforderungsbildschirms; und
Speichermittel zum Speichern eines Fahrzeugteilbildes und eines Fahrzeugteilschadensbildes.

2. System zum Bestimmen der Reparatur von Schäden an Fahrzeugteilen nach Anspruch 1, wobei eine Anforderung auf dem Anforderungsbildschirm durch Eingabe einer auf einer Garantie beschriebenen URL von dem Anforderungsendgerät aus erfolgt.

3. System zum Bestimmen der Reparatur von Schäden an Fahrzeugteilen nach Anspruch 1, wobei das Anforderungsendgerät Bildgebungsmittel enthält und einen auf der Garantie beschriebenen QR-Code (eingetragenes Warenzeichen) ausliest, um eine Anfrage für den Anforderungsbildschirm zu stellen.

4. System zum Bestimmen der Reparatur von Schäden an Fahrzeugteilen nach einem der Ansprüche 1 bis 3, wobei das Anforderungsendgerät E-Mail-Sende- und -Empfangsmittel aufweist; und wobei wenn eine Anforderung des Anforderungsbildschirms erfolgt, zunächst ein E-Mail-Adressen-Registrierungsbildschirm von der Vorrichtung zum Bestimmen der Zulässigkeit einer Garantieanforderung für Schäden an Fahrzeugteilen verteilt wird, und wenn die Registrierung einer E-Mail-Adresse abgeschlossen ist, eine URL zum Anforderungsbildschirm an die E-Mail-Adresse gesendet wird.

5. System zum Bestimmen der Reparatur von Schäden an Fahrzeugteilen nach Anspruch 4, wobei das Bestimmungsergebnis auch an die registrierte E-Mail-Adresse gesendet wird.

6. System zum Bestimmen der Reparatur von Schäden an Fahrzeugteilen nach einem der Ansprüche 1 bis 5, wobei das Bestimmungsergebnis einen QR-Code (eingetragenes Warenzeichen) enthält.

7. System zum Bestimmen der Reparatur von Schäden an Fahrzeugteilen nach einem der Ansprüche 1 bis 6, wobei das Fahrzeugteil eine Windschutzscheibe ist und das Bild des Fahrzeugteils ein Bild eines Frontkühlergrills eines Fahrzeugs ist.

8. Vorrichtung zum Bestimmen der Zulässigkeit einer Garantieanforderung für Schäden an Fahrzeugteilen, die in dem System nach einem der Ansprüche 1 bis 7 verwendet wird.

9. Verfahren zum Betreiben einer Vorrichtung zum Bestimmen der Zulässigkeit einer Garantieanforderung für Schäden an Fahrzeugteilen, das in dem System nach einem der Ansprüche 1 bis 7 oder in der Vorrichtung zum Bestimmen der Zulässigkeit einer Garantieanforderung für Schäden an Fahrzeugteilen nach Anspruch 8 verwendet wird, umfassend:
einen Schritt des Empfangens einer Garantieanforderung von dem Anforderungsendgerät;
einen Schritt des Verteilens eines Anforderungsbildschirms an das Anforderungsendgerät;
einen Schritt des Registrierens eines Anforderungsinhalts von dem Anforderungsendgerät;
einen Schritt des Identifizierens durch die Bildverarbeitungseinrichtung von Informationen über ein Fahrzeugteil und einen Zustand eines Fahrzeugteilschadens aus einem Fahrzeugteilbild und einem Fahrzeugteilschadensbild, die in dem Anforderungsinhalt enthalten sind, wobei die Informationen durch Extrahieren einer auf Pixelwerten des Bildes basierenden Merkmalsmenge identifiziert werden;
einen Schritt des Vergleichens des in Bezug auf die Merkmalsmenge ausgedrückten Zustands des Fahrzeugteilschadens mit den Merkmalsmengen einer großen Anzahl von in dem Fahrzeugteilschadensbild-Speichermittel gespeicherten Fahrzeugteilschadensbildem, um mittels Mustererkennung einen Typ des Fahrzeugteilschadens zu erkennen;
einen Schritt des Bestimmens, ob die identifizierte Art des Fahrzeugteilschadens eine Garantieanforderungsbedingung erfüllt; und
einen Schritt des Verteilens eines Bestimmungsergebnisses an das Anforderungsendgerät.

10. Verfahren nach Anspruch 9, das von Anspruch 4 abhängt oder von den Ansprüchen 5 bis 8 abhängt, die von Anspruch 4 abhängen, das ferner umfasst:
einen Schritt des Verteilens des E-Mail-Adressen-Registrierungsbildschirms an das Anforderungsendgerät, bevor der Anforderungsbildschirm an das Anforderungsendgerät verteilt wird;
einen Schritt des Registrierens einer E-Mail-Adresse von dem Anforderungsendgerät;
einen Schritt des Sendens einer URL zum Zugreifen auf den Anforderungsbildschirm an die registrierte E-Mail-Adresse; und
einen Schritt des Empfangs eines Zugriffs von dem Anforderungsendgerät.

11. Verfahren nach Anspruch 10, das ferner einen Schritt des Sendens eines Bestimmungsergebnisses an die registrierte E-Mail Adresse umfasst.

12. Verfahren nach einem der Ansprüche 9 bis 11, wobei das Bestimmungsergebnis mit einem im Bestimmungsergebnis enthaltenen QR-Code (eingetragene Marke) verteilt und/oder versendet wird.

13. Programm zum Betreiben einer Vorrichtung zum Bestimmen der Zulässigkeit einer Garantieanforderung für Schäden an Fahrzeugteilen, das in dem System nach einem der Ansprüche 1 bis 7 oder in der Vorrichtung zum Bestimmen der Zulässigkeit einer Garantieanforderung für Schäden an Fahrzeugteilen nach Anspruch 8 verwendet wird, umfassend:
einen Schritt des Empfangens einer Garantieanforderung von dem Anforderungsendgerät;
einen Schritt des Verteilens eines Anforderungsbildschirms an das Anforderungsendgerät;
einen Schritt des Registrierens eines Anforderungsinhalts von dem Anforderungsendgerät;
einen Schritt des Identifizierens durch die Bildverarbeitungseinrichtung von Informationen über ein Fahrzeugteil und einen Zustand eines Fahrzeugteilschadens aus einem Fahrzeugteilbild und einem Fahrzeugteilschadensbild, die in dem Anforderungsinhalt enthalten sind, wobei die Informationen durch Extrahieren einer auf Pixelwerten des Bildes basierenden Merkmalsmenge identifiziert werden;
einen Schritt des Vergleichens des in Bezug auf die Merkmalsmenge ausgedrückten Zustands des Fahrzeugteilschadens mit den Merkmalsmengen einer großen Anzahl von in dem Fahrzeugteilschadensbild-Speichermittel gespeicherten Fahrzeugteilschadensbildem, um mittels Mustererkennung einen Typ des Fahrzeugteilschadens zu erkennen;
einen Schritt des Bestimmens, ob die identifizierte Art des Fahrzeugteilschadens eine Garantieanforderungsbedingung erfüllt; und
einen Schritt des Verteilens eines Bestimmungsergebnisses an das Anforderungsendgerät.

14. Programm nach Anspruch 13, das von Anspruch 4 abhängt oder von den Ansprüchen 5 bis 8 abhängt, die von Anspruch 4 abhängen, das ferner umfasst:
einen Schritt des Verteilens des E-Mail-Adressen-Registrierungsbildschirms an das Anforderungsendgerät, bevor der Anforderungsbildschirm an das Anforderungsendgerät verteilt wird;
einen Schritt des Registrierens einer E-Mail-Adresse von dem Anforderungsendgerät;
einen Schritt des Sendens einer URL zum Zugreifen auf den Anforderungsbildschirm an die registrierte E-Mail-Adresse; und
einen Schritt des Empfangs eines Zugriffs von dem Anforderungsendgerät.

15. Programm nach Anspruch 14, das femer einen Schritt des Sendens eines Bestimmungsergebnisses an die registrierte E-Mail Adresse umfasst.

16. Programm nach einem der Ansprüche 13 bis 15, wobei das Bestimmungsergebnis mit einem im Bestimmungsergebnis enthaltenen QR-Code (eingetragene Marke) verteilt und/oder versendet wird.

## Revendications

1. Un système de détermination de réparation de dommages à un élément de véhicule comprenant:
un terminal du demandeur pour effectuer une demande de garantie pour dommages à un élément de véhicule; et
un dispositif de détermination d'admissibilité d'une demande de garantie pour dommages à un élément de véhicule,
dans lequel le terminal du demandeur et le dispositif de détermination d'admissibilité d'une demande de garantie pour dommages à un élément de véhicule sont connectés entre eux via Internet,
dans lequel le dispositif de détermination d'admissibilité d'une demande de garantie pour dommages à un élément de véhicule comprend:
des moyens de partage d'un écran de demande pour partager un écran de demande sur le terminal du demandeur lorsqu'une demande est reçue du terminal du demandeur;
des moyens de réception de demande de garantie pour enregistrer un contenu de demande du terminal du demandeur;
des moyens de stockage d'images de dommages à un élément de véhicule pour stocker un grand nombre d'images de dommages à un élément de véhicule;
des moyens de traitement d'images pour identifier des informations sur un élément de véhicule et un état de dommage à un élément de véhicule à partir d'une image d'un élément de véhicule et d'une image des dommages à un élément de véhicule incluses dans un contenu de demande, lesdites informations étant identifiées par extraction d'une quantité de caractéristiques basées sur des valeurs de pixels de l'image;
des moyens d'identification de type pour comparer l'état des dommages à l'élément de véhicule exprimé en termes de ladite quantité de caractéristiques avec les quantités de caractéristiques d'un grand nombre d'images de dommages à un élément de véhicule stockées dans les moyens de stockage d'images de dommages à un élément de véhicule pour identifier un type de dommage à un élément de véhicule au moyen de la reconnaissance de formes;
des moyens de détermination de demande pour déterminer si le type de dommage à un élément de véhicule identifié satisfait à une condition de demande de garantie; et
des moyens de partage de résultats de détermination pour partager un résultat de détermination avec le terminal du demandeur, et
dans lequel le terminal du demandeur comprend:
des moyens d'affichage d'écran pour afficher l'écran de demande; et
des moyens de stockage pour stocker une image d'un élément de véhicule et une image de dommages à un élément de véhicule.

2. Le système de détermination de réparation de dommages à un élément de véhicule selon la revendication 1, dans lequel une demande sur l'écran de demande est effectuée en saisissant l'URL reportée sur une garantie du terminal du demandeur.

3. Le système de détermination de réparation de dommages à un élément de véhicule selon la revendication 1, dans lequel le terminal du demandeur comprend des moyens d'imagerie et lit un code QR (marque déposée) reporté sur la garantie pour effectuer une demande sur l'écran de demande.

4. Le système de détermination de réparation de dommages à un élément de véhicule selon l'une quelconque des revendications 1 à 3, dans lequel le terminal du demandeur comprend des moyens d'envoi et de réception d'émail; et dans lequel, lorsque une demande pour l'écran de demande est effectuée, un écran d'enregistrement d'adresse émail est d'abord partagé à partir du dispositif de détermination d'admissibilité d'une demande de garantie pour dommages à un élément de véhicule, et, lorsque un enregistrement d'une adresse email est terminé, l'URL à l'écran de demande est envoyé à l'adresse émail.

5. Le système de détermination de réparation de dommages à un élément de véhicule selon la revendication 4, dans lequel le résultat de détermination est également envoyé à l'adresse email enregistrée.

6. Le système de détermination de réparation de dommages à un élément de véhicule selon l'une quelconque des revendications 1 à 5, dans lequel le résultat de détermination contient un code QR (marque déposée).

7. Le système de détermination de réparation de dommages à un élément de véhicule selon l'une quelconque des revendications 1 à 6, dans lequel l'élément de véhicule est un pare-brise et l'image de l'élément de véhicule est une image d'une calandre antérieure d'un véhicule.

8. Un dispositif qui détermine l'admissibilité d'une demande de garantie pour dommages à un élément de véhicule et qui est utilisé dans le système selon l'une quelconque des revendications 1 à 7.

9. Une méthode qui fait fonctionner un dispositif de détermination d'admissibilité d'une demande de garantie pour dommages à un élément de véhicule et qui est utilisée dans le système selon l'une quelconque des revendications 1 à 7 ou le dispositif de détermination d'admissibilité d'une demande de garantie pour dommages à un élément de véhicule selon la revendication 8, comprenant:
une étape de réception d'une demande de garantie provenant du terminal du demandeur;
une étape de partage d'un écran de demande avec le terminal du demandeur;
une étape d'enregistrement d'un contenu de demande provenant du terminal du demandeur;
une étape d'identification des informations sur un élément de véhicule et sur un état de dommage à un élément de véhicule à partir d'une image de l'élément de véhicule et d'une image des dommages à un élément de véhicule contenue dans le contenu de demande au moyen de moyens de traitement d'images, lesdites informations étant identifiées par l'extraction d'une quantité de caractéristiques basées sur des valeurs de pixels de l'image;
une étape de comparaison de l'état des dommages à un élément de véhicule exprimé en termes de ladite quantité de caractéristiques avec les quantités caractéristiques d'un grand nombre d'images de dommages à un élément de véhicule stockées dans les moyens de stockage d'images de dommages à un élément de véhicule pour identifier un type de dommage à un élément de véhicule au moyen de la reconnaissance de formes;
une étape de détermination si le type de dommage à l'élément de véhicule identifié satisfait à une condition de demande de garantie; et
une étape de partage d'un résultat de détermination avec le terminal du demandeur.

10. La méthode selon la revendication 9 qui dépend de la revendication 4 ou qui dépend des revendications 5 à 8 dépendantes de la revendication 4, comprend en outre:
une étape de partage de l'écran d'enregistrement d'adresse email avec le terminal du demandeur avant de partager l'écran de demande avec le terminal du demandeur;
une étape d'enregistrement d'une adresse email provenant du terminal du demandeur;
une étape d'envoi une URL à l'adresse email enregistrée pour accéder à l'écran de demande; et
une étape de recevoir un accès du terminal du demandeur.

11. La méthode selon la revendication 10 comprenant en outre une étape d'envoi d'un résultat de détermination à l'adresse email enregistrée.

12. La méthode selon l'une quelconque des revendications 9 à 11, dans laquelle le résultat de détermination est partagé et/ou envoyé avec un code QR (marque déposée) contenu dans le résultat de détermination.

13. Un programme qui fait fonctionner un dispositif de détermination d'admissibilité d'une demande de garantie pour dommages à un élément de véhicule et qui est utilisé dans le système selon l'une quelconque des revendications 1 à 7 ou le dispositif de détermination d'admissibilité d'une demande de garantie pour dommages à un élément de véhicule selon la revendication 8, comprenant:
une étape de réception d'une demande de garantie provenant du terminal du demandeur;
une étape de partage d'un écran de demande avec le terminal du demandeur;
une étape d'enregistrement d'un contenu de demande provenant du terminal du demandeur;
une étape d'identification des informations sur un élément de véhicule et sur un état de dommage à un élément de véhicule à partir d'une image de l'élément de véhicule et d'une image des dommages à un élément de véhicule contenue dans le contenu de demande au moyen de moyens de traitement d'images, lesdites informations étant identifiées par l'extraction d'une quantité de caractéristiques basées sur des valeurs de pixels de l'image;
une étape de comparaison de l'état des dommages à un élément de véhicule exprimé en termes de ladite quantité de caractéristiques avec les quantités caractéristiques d'un grand nombre d'images de dommages à un élément de véhicule stockées dans les moyens de stockage d'images de dommages à un élément de véhicule pour identifier un type de dommage à un élément de véhicule au moyen de la reconnaissance de formes;
une étape de détermination si le type de dommage à l'élément de véhicule identifié satisfait à une condition de demande de garantie; et
une étape de partage d'un résultat de détermination avec le terminal du demandeur.

14. Le programme selon la revendication 13 qui dépend de la revendication 4 ou qui dépend des revendications 5 à 8 dépendantes de la revendication 4, comprenant en outre:
une étape de partage de l'écran d'enregistrement d'adresse email avec le terminal du demandeur avant de partager l'écran de demande avec le terminal du demandeur;
une étape d'enregistrement d'une adresse email provenant du terminal du demandeur;
une étape d'envoi une URL à l'adresse email enregistrée pour accéder à l'écran de demande; et
une étape de recevoir un accès du terminal du demandeur.

15. Le programme selon la revendication 14, comprenant en outre une étape d'envoi d'un résultat de détermination à l'adresse email enregistrée.

16. Le programme selon l'une quelconque des revendications 13 à 15, dans lequel le résultat de détermination est partagé et/ou envoyé avec un code QR (marque déposée) contenu dans le résultat de détermination.
